# EUROPEAN PATENT SPECIFICATION

(11) **EP 2 228 926 B1**
(45) Date of publication and mention of the grant of the patent: **30.08.2017**
(21) Application number: 09305227.2
(22) Date of filing: 12.03.2009
(51) Int. Cl.: H04J 3/06

(54) **Method for synchronizing clocks by seperated transmissions of first and second data via at least one timing distribution protocol, and associated system and module**
Verfahren zur Synchronisierung von Uhren durch getrennte Übertragungen von ersten und zweiten Daten über mindestens ein Zeiteinteilungsprotokoll und zugehöriges System und Modul
Procédé de synchronisation d'horloges par transmissions séparées de premières et deuxièmes données via au moins un protocole de répartition horaire

(43) Date of publication of application: 15.09.2010
(73) Proprietor: ALCATEL LUCENT, 92100 Boulogne-Billancourt (FR)
(72) Inventor: Le Pallec, Michel ALCATEL-LUCENT, 91620, NOZAY (FR); Ferrant, Jean-Loup, 06000 NICE (FR)
(74) Representative: Berthier, Karine

(56) References cited:
- WO-A-2004/075445
- US-A1- 2006 088 023
- US-A1- 2008 170 592

## Description

The present invention relates to data packet networks (or packet switched networks (PSNs)), and more precisely to synchronization of clocks in a data packet network.

As it is known by the man skilled in the art, some (stringent) client applications, running into client communication nodes, need a precise clock reference for running properly. This is notably the case of some mobile network applications (for instance used for base station synchronization).

This precise clock reference can be provided by a precise and highly stable client clock equipping the considered client communication node. But such a client clock is usually very expensive.

Another solution consists in transmitting data representative of timing information of a very precise master clock from a source communication node to the client communication node (connected to a data packet network) via a time distribution protocol, such as those referenced IETF NTPV4 (Network Time Protocol) and IEEE 1588V2, for instance. These above mentioned time distribution protocols are intended for transmitting information messages (or packets) containing timing information at regular intervals from a server (or source communication node) to one or more client communication nodes in order to synchronize the (low-cost) client clocks with the server (or master) clock. In fact, these information messages are bi-directional (or "round-trip") messages exchanged between the server and a client (communication node). Generally, a client needs to receive a minimal number of (good or pertinent) information messages (or packets) from a server, during a given time interval, to properly synchronize its (low-cost) clock with the server clock.

One means here by "low-cost clock" a clock having a poor clock stability (i.e. a fast frequency drift in a free run mode) and/or poor capabilities for the filtering of the packet jitter.

From a time distribution perspective, the low-cost aspect implies a degraded time performance (notably in terms of accuracy) of the client clock in the locked mode comparatively to an expensive/efficient time client clock because the client clock should remain enough stable during the exchange of the bi-directional information messages (in order to decrease the convergence time for a given time accuracy target). Document WO 2004/075445 A1 proposes to encode different frequency references in relation to a master frequency reference and then to transmit these different frequency references through the Ethernet network. So, the system of D1 is arranged for transmitting only first data representative of a frequency reference of a master clock from a source communication node to client communication nodes via a time distribution protocol and through a single communication path. In document US 2006/0088023 A1 a single frequency network system is provided, where the system includes a head-end and a plurality of transmitters. The head-end calculates timing information based upon a time reference having a second resolution. Thereafter, the head-end is capable of sending content including the timing information. The transmitter(s) calculates the delay based upon the timing info. and a time reference having a first resolution. Moreover, if a failure occurs on the communication path (or link) between the master and the client, the client clock enters in a free run mode (or holdover) until reconfiguration of the synchronization topology. In this case, the lack of stability of the low-cost client clock may have a detrimental impact on the time accuracy during the reconfiguration time/delay of the synchronization topology.

So the object of this invention is to improve the frequency synchronization (or syntonization) of low-cost client clocks in data packet networks, and notably to avoid client clocks to enter into a free run mode.

For this purpose, the invention provides a method, intended for synchronizing a client clock of a client communication node with a master clock in a data packet network, and comprising the steps of:
i) transmitting first data representative of timing information of the master clock from a source communication node to the client communication node via a time distribution protocol,
ii) transmitting second data representative of a frequency reference correlated to the timing information from a chosen communication node to the client communication node via a time distribution protocol, and
iii) differentiating the transmitted first and/or second data into the client communication node to synchronize the client clock with the master clock by means of the timing information and/or frequency reference represented by these differentiated first and second data.

The method according to the invention may include additional characteristics considered separately or combined, and notably:
- in step ii) the chosen communication node (used for transmitting the second data) may be different from the source communication node;
- in a variant, in step ii) one may use the source communication (timing) node as the chosen communication node for transmitting the second data;
   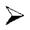 in steps i) and ii) the source communication node may transmit the first data and the second data via two different communication paths (or links) of the data packet network, respectively;
      - in steps i) and ii) the source communication node may add a first identifier to the first data and a second identifier to the second data, and in step iii) the client communication node may differentiate the transmitted first and second data from their respective first and second identifiers;
      - in a variant, in step i) the source communication node may add a first identifier, designating it, and a second identifier, designating the communication path (or link) used for transmitting the first data, to these first data, and in step ii) the source communication node may add the first identifier, designating it, and a third identifier, designating the other communication path (or link) used for transmitting the second data, to these second data, and in step iii) the client communication node may differentiate the transmitted first and second data from their respective first, second and third identifiers;
- in steps i) and ii) one may transmit the first and second data via the same time distribution protocol.

The invention also offers a system, intended for synchronizing a client clock of a client communication node with a master clock in a data packet network, and comprising:
- a first module associated to a source communication node and arranged for generating first data representative of timing information of the master clock to be transmitted by the source communication node to the client communication node via a time distribution protocol,
- a second module associated to a chosen communication node and arranged for generating second data representative of a frequency reference correlated to the timing information to be transmitted by the chosen communication node to the client communication node via a time distribution protocol, and
- a third module associated to the client communication node and arranged for differentiating the transmitted first and second data to provide the timing information and frequency reference they represent, in order the client clock could be synchronized with the master clock by means of this timing information and/or this frequency reference.

The system according to the invention may include additional characteristics considered separately or combined, and notably:
- the chosen communication node used for transmitting the second data may be different from the source communication node;
- in a variant, the chosen communication node (used for transmitting the second data) may be the source communication node;
   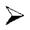 the source communication node may be arranged for transmitting the first data and the second data via two different communication paths (or links) of the data packet network, respectively;
      - the first module may be arranged for adding a first identifier to the first data and a second identifier to the second data. In this case the third module may be arranged for differentiating the transmitted first and second data from their respective first and second identifiers;
      - in a variant, the first module may be arranged for adding a first identifier, designating the source communication node, and a second identifier, designating the communication path (or link) used for transmitting the first data, to these first data, and the second module may be arranged for adding this aforementioned first identifier, designating the chosen communication node, and a third identifier, designating the other communication path (or link) used for transmitting the second data, to these second data. In this case the third module may be arranged for differentiating the transmitted first and second data from their respective first, second and third identifiers.

The invention also offers a third module, intended for being associated to a client communication node connected to a data packet network, and arranged when this client communication node has received first data (representative of timing information of a master clock) from a source communication node and via a time distribution protocol, and/or second data (representative of a frequency reference correlated to these timing information) from a chosen communication node and via a time distribution protocol, for differentiating these received first and second data to provide the timing information and frequency reference they represent, in order a client clock of the client communication node could be synchronized with the master clock by means of this timing information and/or this frequency reference.

This third module may be further arranged for differentiating the transmitted first and second data from first and second identifiers added respectively to them, or for differentiating the transmitted first and second data from first and second identifiers added to the first data and respectively designating the source communication node associated to a first communication path (or link) used for transmitting the first data, and from first and third identifiers added to the second data and respectively designating the chosen communication node and a second communication path (or link), different from the first path (or link) and used for transmitting the second data.

The invention is particularly well adapted, but not exclusively, to the transmission of first and/or second data according to an "over IP" (Internet Protocol) time distribution protocol which is chosen from a group comprising at least IEEE 1588V2/UDP/IP and NTP/UDP/IP.

Other features and advantages of the invention will become apparent on examining the detailed specifications hereafter and the appended drawings, wherein:

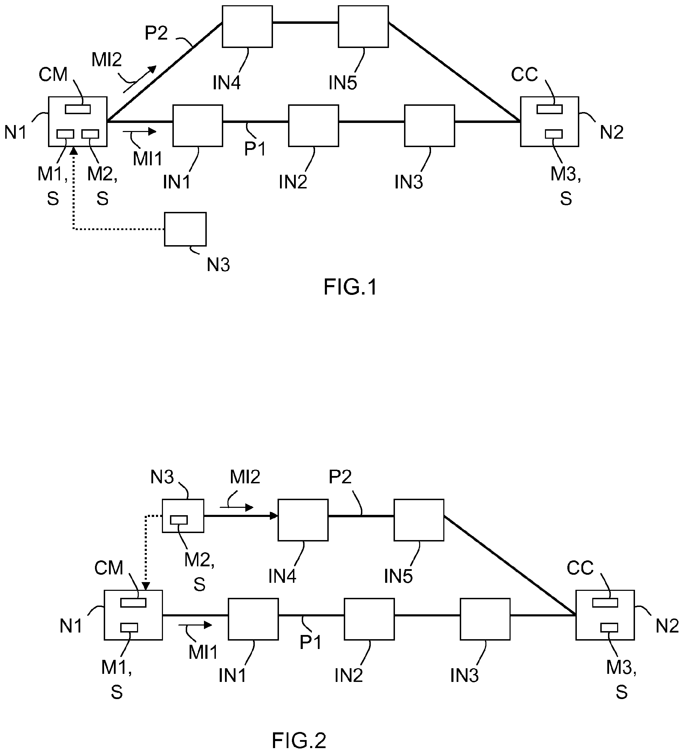

- figure 1 schematically illustrates a part of a data packet network comprising a source communication node and a client communication node, connected through intermediate communication nodes and equipped respectively with complementary parts of a first example of embodiment of a system according to the invention, and
- figure 2 schematically illustrates a part of a data packet network comprising a source communication node, an auxiliary communication node and a client communication node, connected through intermediate communication nodes and equipped with complementary parts of a second example of embodiment of a system according to the invention.

The appended drawings may serve not only to complete the invention, but also to contribute to its definition, if need be.

The invention aims at offering a method and an associated system (S) intended for synchronizing client clocks (CC) of client communication nodes (N2) with a master clock (MC) in a data packet network.

In the following description it will be considered, only as example, that the data packet network (or PSN) is a mobile network comprising communication nodes such as base stations to be synchronized. But the invention is not limited to this type of data packet network. Indeed it concerns any type of data packet network or packet switched network (PSN).

As mentioned above, the invention proposes a method intended for synchronizing client clocks CC of client communication nodes (N2) with a master clock (MC) in a data packet network comprising communication nodes.

A part of a data packet network comprising a source communication node N1, a client communication node N2 and five intermediate communication nodes INi (i = 1 to 5) is illustrated in figure 1. For instance, the client communication nodes N2 are base stations of a radio access network.

The client communication node N2 comprises a (low-cost) client clock CC which must be (time) synchronized with a master clock MC.

In the examples illustrated in figure 1 and 2, the master clock MC is located into the source communication node N1. But this is not mandatory. Indeed, the master clock MC could be located into a network equipment coupled to the source communication node N1.

For instance, the source communication node N1 is a server of synchronization information.

The method according to the invention comprises three main steps.

A first main step (i) consists in transmitting first data, representative of timing information of the master clock MC, from the source communication node N1 to at least one client communication node N2 via a time distribution protocol.

These first data are transmitted into first packets (or messages) MI1. For instance, these first data comprise a timestamp indicating when they have been generated in the server clock reference frame which is correlated to a frequency reference provided by an auxiliary communication node N3. This frequency reference can be of any type. So it can be produced by a local oscillator having a high stability or by a radio navigation system (such as GPS (Global Positioning System), for instance).

In the following description it will be considered, only as example, that the first packets (or messages) MI1 are transmitted via an IP time distribution protocol, such as IEEE 1588V2/UDP/IP or else NTP/UDP/IP, for instance. But the invention is not limited to this type of time distribution protocol. Indeed it concerns any type of time distribution protocol intended for transmitting (or distributing) first packets (or messages) MI1.

The first main step (i) can be implemented by a first module M1 of the system S according to the invention. As illustrated in figures 1 and 2, this first module M1 can be located into the source communication node N1. But this is not mandatory. Indeed, it could be coupled or connected to the source communication node N1. More generally the first module M1 is associated to the source communication node N1.

This first module M1 is arranged for generating first data that will be transmitted into first messages MI1 by the associated source communication node N1 to one or more client communication nodes N2 via the chosen time distribution protocol.

In case where the first module M1 is located into the source communication node N1, it is preferably made of software modules, at least partly. But it could be also made of electronic circuit(s) or hardware modules, or a combination of hardware and software modules. In case where it is made of software modules it can be stored in a memory.

A second main step (ii) of the method according to the invention consists in transmitting second data representative of the frequency reference (which is here provided by the auxiliary communication node N3 and correlated to the timing information represented by the first data) from a chosen communication node to the client communication node N2 via a time distribution protocol.

It is important to note that the first (i) and second (ii) main steps may be carried out in parallel or in series.

In the first example of embodiment illustrated in figure 1, the chosen communication node (also called "syntonization source") which distributes the frequency reference is the source communication node N1, while in the second example of embodiment illustrated in figure 2, the chosen communication node for the distribution of a frequency reference is the auxiliary communication node N3.

The second data are transmitted into second packets (or messages) MI2. For instance, these second data are 1588V2 messages embedding the relevant aforementioned identifiers.

In the following description it will be considered, only as example, that the second packets (or messages) MI2 are transmitted via the same IP time distribution protocol as the one used for transmitting the first packets (or messages) MI1. But this is not mandatory. Indeed two different time distribution protocols may be used for transmitting (or distributing) respectively the first packets (or messages) MI1 and second packets (or messages) MI2.

The second main step (ii) can be implemented by a second module M2 of the system S according to the invention. As illustrated in figure 1, this second module M2 can be located into the source communication node N1. But this is not mandatory. Indeed, as illustrated in figure 2, this second module M2 can be also located into the auxiliary communication node N3.

This second module M2 is arranged for generating second data that will be transmitted into second messages MI2 by the syntonization source (i.e. the source communication node N1 or the auxiliary communication node N3) to one or more client communication node N2 via the chosen time distribution protocol.

This second module M2 is preferably made of software modules, at least partly. But it could be also made of electronic circuit(s) or hardware modules, or a combination of hardware and software modules (notably when an hardware timestamping is required). In case where it is made of software modules it can be stored in a memory.

It is important to note that when the first M1 and second M2 modules are located in the source communication node N1, they may be two parts of the same module (or device).

As illustrated in figure 1, when the source communication node N1 is in charge of transmitting both the first MI1 and second MI2 messages, it is advantageous that the source communication node N1 transmits the first data in a first communication path (or link) P1 and the second data in a second communication path (or link) P2.

One means here by "first P1 and second P2 communication paths" two communication paths (or links) defined respectively through first and second groups of intermediate nodes INi differing by at least one intermediate node.

It is important to note that it is desirable that the first P1 and second P2 (communication) paths be as different as possible, and optimally that they fully differ.

In the second embodiment illustrated in figure 2, the first P1 and second P2 (communication) paths differ because the auxiliary communication node N3 and the source communication node N1 are spatially separated and therefore connected to different intermediate nodes IN1 and IN4, respectively.

A third main step (iii) of the method according to the invention consists in differentiating the transmitted first and/or second data into the client communication node N2 in order to synchronize its client clock CC with the master clock MC by means of the timing information and/or frequency reference represented by these differentiated first and second data.

So, in case where the first MI1 and second MI2 messages follow first P1 and second P2 paths, respectively, as illustrated in figures 1 and 2, if a failure occurs on the first path P1 or on the second path P2 the client communication node N2 will still receive the second messages MI2 or the first messages MI1. The first data contained into the first messages MI1 being representative of timing information correlated to the frequency reference represented by the second data contained into the second messages MI2, whatever the path on which occurs a failure, the client communication node N2 will have at its disposal either the timing information or the frequency reference required for synchronizing its client clock CC.

For instance, if a failure occurs on the first path P1, the stability of the client clock CC is guaranteed despite the loss of the timing information. This stability provides more (delay) margins for the synchronization topology reconfiguration.

If a failure occurs on the second path P2, the frequency reference coming from the syntonization source N1 (figure 1) or N3 (figure 2) is lost. Nevertheless, the client clock CC still has the time information and therefore can deduce an estimate of this frequency reference from this time information.

The third main step (iii) can be implemented by a third module M3 of the system S according to the invention. As illustrated in figures 1 and 2, this third module M3 can be located into the source communication node N1. But this is not mandatory. Indeed, it could be coupled or connected to the client communication node N2. More generally a third module M3 is associated to a client communication node N2.

This third module M3 is arranged for differentiating the first and second data received by its associated client communication node N2 in order to provide to it the timing information and frequency reference they represent.

This third module M3 is preferably made of software modules, at least partly. But it could be also made of electronic circuit(s) or hardware modules, or a combination of hardware and software modules (notably when hardware operations are required). In case where it is made of software modules it can be stored in a memory.

It is important to note that it is advantageous to make use of identifiers to ease the differentiation of the received first and second data into the client communication node N2.

For instance, in the first step (i) one (the first module M1) may add a specific first identifier to the first data, and in the second step (ii) one (the second module M2) may add a specific second identifier to the second data. In this case the client communication node N2 (or more precisely its associated third module M3) differentiates the received first and second data from their respective first and second identifiers.

To ease differentiation of the received first and second data when a client communication node N2 receive first messages MI1 from several sources communication nodes N1 and/or second messages MI2 from several syntonization nodes N1 or N3, in the first step (i) one (the first module M1) may also add a source identifier to the first data, and in the second step (ii) one (the second module M2) may also add a (syntonization) source identifier to the second data. In this case the client communication node N2 (or more precisely its associated third module M3) differentiates the received first and second data from their respective first and second identifiers but also from their respective source identifiers. The source identifiers may be IP address, for instance.

In a variant, one (the first module M1) may add a first identifier, designating its associated source communication node N1, and a second identifier, designating the first path P1 used by this source communication node N1 for transmitting the first data, to these first data, and in step ii) one (the second module M2) may also add a first identifier, designating the syntonization source (or chosen communication node) N1 or N3, and a third identifier, designating the other path used for transmitting said second data, to said second data.

In this case the client communication node N2 (or more precisely its associated third module M3) differentiates the received first and second data from their respective first, second and third identifiers. The first identifiers (or source identifiers) may be IP address, for instance.

It is also important to note that both the first messages MI1 and the second messages MI2 could be bi-directional messages exchanged between a source node N1 or N3 and at least one client communication node N2. But in a variant, the first messages MI1 could be bi-directional messages exchanged between a source communication node N1 and a client communication node N2, while the second messages MI2 could be one-directional messages transmitted from a syntonization source N1 or N3 to at least one client communication node N2.

It is also important to note that a client communication node N2 may receive second messages MI2 emanating from different syntonization sources N1 or N3. In this case, the client clock CC or the third module M3 may be arranged for selecting the best syntonization source according to at least one source quality criteria such as the "Stratum" field within NTP messages, for instance.

The invention is not limited to the embodiments of method, system and third module described above, only as examples, but it encompasses all alternative embodiments which may be considered by one skilled in the art within the scope of the claims hereafter.

## Claims

1. A method of synchronizing a client clock (CC) of a client communication node (N2) with a master clock (MC) in a data packet network, **characterized in that** it comprises the steps of i) transmitting first data representative of timing information of said master clock (MC) from a source communication node (N1) to said client communication node (N2) via a time distribution protocol at packet level and through a first communication path, ii) transmitting second data representative of a frequency reference, to which is correlated said timing information, from a chosen communication node (N1; N3) to said client communication node (N2) via a time distribution protocol at packet level and through a second communication path different from the first communication path, and iii) differentiating said transmitted first and second data into said client communication node (N2) to synchronize said client clock (CC) with said master clock (MC) by means of either the timing information or the frequency reference represented by said differentiated first and second data.

2. Method according to claim 1, wherein in step ii) said chosen communication node (N3) used for transmitting said second data is different from said source communication node (N1).

3. Method according to claim 1, wherein in step ii) one uses said source communication node (N1) as said chosen communication node (N1; N3) for transmitting said second data.

4. Method according to one of claims 1 to 3, wherein in steps i) and ii) said source communication node (N1) adds a first identifier to said first data and a second identifier to said second data, and in step iii) said client communication node (N2) differentiates said transmitted first and second data from their respective first and second identifiers.

5. Method according to one of claims 1 to 3, wherein in step i) said source communication node (N1) adds a first identifier, designating said source communication node (N1), and a second identifier, designating the communication path used for transmitting said first data, to said first data, and in step ii) said chosen communication node (N1; N3) adds a first identifier, designating said chosen communication node (N1; N3), and a third identifier, designating the other communication path used for transmitting said second data, to said second data, and in step iii) said client communication node (N2) differentiates said transmitted first and second data from their respective first, second and third identifiers.

6. Method according to one of claims 1 to 5, wherein in steps i) and ii) one transmits the first and second data via the same time distribution protocol.

7. System (S) for synchronizing a client clock (CC) of a client communication node (N2) with a master clock (MC) in a data packet network, **characterized in that** it comprises i) a first module (M1) associated to a source communication node (N1) and arranged for generating first data representative of timing information of said master clock (MC) to be transmitted by said source communication node (N1) to said client communication node (N2) via a time distribution protocol at packet level and through a first communication path, ii) a second module (M2) associated to a chosen communication node (N1; N3) and arranged for generating second data representative of a frequency reference to which is correlated said timing information to be transmitted by said chosen communication node (N1; N3) to said client communication node (N2) via a time distribution protocol at packet level and through a second communication path different from the first communication path, and iii) a third module (M3) associated to said client communication node (N2) and arranged for differentiating said transmitted first and second data to provide the timing information and frequency reference they represent, in order said client clock (CC) could be synchronized with said master clock (MC) by means of either this timing information or this frequency reference.

8. System according to claim 7, wherein said chosen communication node (N3) used for transmitting said second data is different from said source communication node (N1).

9. System according to claim 7, wherein said chosen communication node (N1; N3) used for transmitting said second data is said source communication node (N1).

10. System according to one of claims 7 to 9, wherein said first module (M1) is arranged for adding a first identifier to said first data and a second identifier to said second data, and said third module (M3) is arranged for differentiating said transmitted first and second data from their respective first second identifiers.

11. System according to one of claims 7 to 9, wherein i) said first module (M1) is arranged for adding a first identifier, designating said source communication node (N1), and a second identifier, designating the communication path used for transmitting said first data, to said first data, ii) said second module (M2) is arranged for adding a first identifier, designating said chosen communication node (N1; N3), and a third identifier, designating the other communication path used for transmitting said second data, to said second data, and iii) said third module (M3) is arranged for differentiating said transmitted first and second data from their respective first, second and third identifiers.

12. Third module (M3) intended to be associated to a client communication node (N2) of a data packet network, **characterized in that** it is arranged when said client communication node (N2) has received first data representative of timing information of a master clock (MC) from a source communication node (N1) and via a time distribution protocol at packet level and through a first communication path, and/or second data representative of a frequency reference, to which is correlated said timing information, from a chosen communication node (N1; N3) and via a time distribution protocol at packet level and through a second communication path different from the first communication path, for differentiating said received first and second data to provide the timing information and frequency reference they represent, in order a client clock (CC) of said client communication node (N2) could be synchronized with said master clock (MC) by means of either this timing information or this frequency reference.

13. Third module according to claim 12, wherein it is arranged for differentiating said transmitted first and second data from first and second identifiers added respectively to them.

14. Third module according to claim 12, wherein it is arranged for differentiating said transmitted first and second data from first and second identifiers added to said first data and respectively designating said source communication node (N1) associated to a first communication path used for transmitting said first data, and from first and third identifiers added to said second data and respectively designating said chosen communication node (N1; N3) and a second communication path, different from the first communication path and used for transmitting said second data.

15. Use of the method according to one of claims 1 to 6 and the system (S) according to one of claims 7 to 11 for transmitting first and/or second data according to an "over IP" time distribution protocol chosen from a group comprising at least IEEE 1588V2/UDP/IP and NTP/UDP/IP.

## Patentansprüche

1. Verfahren zum Synchronisieren eines Client-Taktgebers (CC) eines Client-Kommunikationsknotens (N2) mit einem Master-Taktgeber (MC) in einem Datenpaket-Netzwerk, **dadurch gekennzeichnet, dass** es die Schritte umfasst: i) Übertragen von ersten repräsentativen Daten der Taktinformation des besagten Master-Taktgebers (MC) von einem Source-Kommunikationsknoten (N1) zu besagtem Client-Kommunikationsknoten (N2) über ein Zeitverteilungsprotokoll auf Paketebene und über einen ersten Kommunikationspfad, ii) Übertragen von zweiten repräsentativen Daten von einer Frequenzreferenz, mit welcher besagte Taktinformation korreliert, von einem gewählten Kommunikationsknoten (N1; N3) zu besagtem Client-Kommunikationsknoten (N2) über ein Zeitverteilungsprotokoll auf Paketebene und über einen zweiten Kommunikationspfad, der anders ist als der erste Kommunikationspfad, und iii) Differenzieren der besagten übertragenen ersten und/oder zweiten Daten in besagten Client-Kommunikationsknoten (N2) zur Synchronisierung besagten Client-Taktgebers (CC) mit dem besagten Master-Taktgeber (MC) mittels entweder der Taktinformation oder der Frequenzreferenz, dargestellt von besagten differenzierten ersten und zweiten Daten.

2. Verfahren nach Anspruch 1, wobei in Schritt ii) besagter gewählter Kommunikationsknoten (N3), verwendet zum Übertragen von besagten zweiten Daten, anders ist als besagter Source-Kommunikationsknoten (N1).

3. Verfahren nach Anspruch 1, wobei in Schritt ii) besagter Source-Kommunikationsknoten (N1) als besagter gewählter Kommunikationsknoten (N1; N3) zum Übertragen von besagten zweiten Daten verwendet wird.

4. Verfahren nach einem der Ansprüche 1 bis 3, wobei bei den Schritten i) und ii) besagter Source-Kommunikationsknoten (N1) eine erste Kennung zu den ersten Daten und eine zweite Kennung zu den zweiten Daten addiert und in Schritt iii) besagter Client-Kommunikationsknoten (N2) besagte übertragene erste und zweite Daten von ihren jeweiligen ersten und zweiten Kennungen differenziert.

5. Verfahren nach einem der Ansprüche 1 bis 3, wobei in Schritt i) besagter Source-Kommunikationsknoten (N1) eine erste Kennung, welche besagten Source-Kommunikationsknoten (N1) bezeichnet, und eine zweite Kennung, welche den zum Übertragen der ersten Daten verwendeten Kommunikationspfad bezeichnet, zu den ersten Daten addiert, und in Schritt ii) besagter gewählter Kommunikationsknoten (N1; N3) eine erste Kennung, weiche besagten gewählten Kommunikationsknoten (N1; N3) bezeichnet, und eine dritte Kennung, welche den anderen Kommunikationspfad bezeichnet, der zum Übertragen der zweiten Daten verwendet wird, zu den zweiten Daten addiert, und in Schritt iii) besagter Client-Kammunikationsknoten (N2) besagte übertragene erste und zweite Daten von ihren jeweiligen ersten, zweiten und dritten Kennungen differenziert.

6. Verfahren nach einem der Ansprüche 1 bis 5, wobei in den Schritten i) und ii) die ersten und zweiten Daten über das gleiche Zeitverteilungsprotokoll übertragen werden.

7. System (S) zum Synchronisieren eines Client-Taktgebers (CC) eines Client-Kommunikationsknotens (N2) mit einem Master-Taktgeber (MC) in einem Datenpaket-Netzwerk, **dadurch gekennzeichnet, dass** es umfasst: i) ein erstes Modul (M1), zugehörig zu einem Source-Kommunikationsknoten (N1) und angeordnet zum Erzeugen von ersten repräsentativen Daten der Taktinformation des besagten Master-Taktgebers (MC), die durch besagten Source-Kommunikationsknoten (N1) zu besagtem Client-Kommunikationsknoten (N2) über ein Zeitverteilungsprotokoll auf Paketebene und über einen ersten Kommunikationspfad zu übertragen sind, ii) ein zweites Modul (M2), zugehörig zu einem gewählten Kommunikationsknoten (N1; N3) und angeordnet zum Erzeugen von zweiten repräsentativen Daten von einer Frequenzreferenz, mit welcher besagte Taktinformation korreliert, welche von einem gewählten Kommunikationsknoten (N1; N3) zu besagtem Client-Kommunikationsknoten (N2) über ein Zeitverteilungsprotokoll auf Paketebene und über einen zweiten Kommunikationspfad, der anders ist als der erste Kommunikationspfad, zu übertragen ist, und iii) ein drittes Modul (M3), zugehörig zu besagtem Client-Kommunikationsknoten (N2) und angeordnet zum Differenzieren der besagten übertragenen ersten und zweiten Daten zum Bereitstellen der Taktinformation und Frequenzreferenz, die sie darstellen, damit besagter Client-Taktgeber (CC) mit besagtem Master-Taktgeber (MC) entweder mittels dieser Taktinformation oder dieser Frequenzreferenz synchronisiert werden kann.

8. System nach Anspruch 7, wobei besagter gewählter Kommunikationsknoten (N3), verwendet zum Übertragen von besagten zweiten Daten, anders ist als besagter Source-Kommunikationsknoten (N1).

9. System nach Anspruch 7, wobei besagter gewählter Kommunikationsknoten (N1; N3), verwendet zum Übertragen von besagten zweiten Daten, besagter Source-Kommunikationsknoten (N1) ist.

10. System nach einem der Ansprüche 7 bis 9, wobei besagtes erstes Modul (M1) angeordnet ist zum Addieren einer ersten Kennung und einer zweiten Kennung zu den besagten zweiten Daten, und besagtes drittes Modul (M3) angeordnet ist zum Differenzieren besagter übertragener erster und zweiter Daten von ihren jeweiligen ersten und zweiten Kennungen.

11. System nach einem der Ansprüche 7 bis 9, wobei i) besagtes erstes Modul (M1) angeordnet ist zum Addieren einer ersten Kennung, welche besagten Source-Kommunikationsknoten (N1) bezeichnet, und einer zweiten Kennung, welche den Kommunikationspfad bezeichnet, der zum Übertragen der besagten ersten Daten verwendet wird, ii) besagtes zweites Modul (M2) angeordnet ist zum Addieren einer ersten Kennung, weiche besagten gewählten Kommunikationsknoten (N1; N3) bezeichnet, und einer dritten Kennung, welche den anderen Kommunikationspfad bezeichnet, der für das Übertragen der besagten zweiten Daten verwendet wird, zu den zweiten Daten, und iii) besagtes drittes Modul (M3) angeordnet ist zum Differenzieren von besagten übertragenen ersten und zweiten Daten von ihren jeweiligen ersten, zweiten und dritten Kennungen.

12. Drittes Modul (M3), welches zugehörig zu einem Kommunikationsknoten (N2) eines Datenpaket-Netzwerks sein soll, **dadurch gekennzeichnet, dass** es angeordnet ist, wenn besagter Client-Kommunikationsknoten (N2) die ersten repräsentativen Daten der Taktinformation eines Master-Taktgebers (MC) von einem Source-Kommunikationsknoten (N1) empfangen hat und über ein Zeitverteilungsprotokoll auf Paketebene und über einen ersten Kommunikationspfad und/oder zweite repräsentativen Daten der Frequenzreferenz mit weicher besagte Taktinformation korreliert, von einem gewählten Kommunikationsknoten (N1; N3) und über ein Zeitverteilungsprotokoll auf Paketebene und über einen zweiten Kommunikationspfad, der anders ist als der erste Kommunikationspfad, zum Differenzieren der besagten empfangenen ersten und zweiten Daten zum Bereitstellen der Taktinformation und der Frequenzreferenz, die sie darstellen, damit besagter Client-Taktgeber (CC) des besagten Client-Kommunikationsknoten (N2) mit besagtem Master-Taktgeber (MC) entweder mittels dieser Taktinformation oder dieser Frequenzreferenz synchronisiert werden kann.

13. Drittes Modul nach Anspruch 12, wobei es angeordnet ist zum Differenzieren von besagten übertragenen ersten und zweiten Daten von den ersten und zweiten jeweils zu ihnen addierten Kennungen.

14. Drittes Modul nach Anspruch 12, wobei es angeordnet ist zum Differenzieren von besagten übertragenen ersten und zweiten Daten von ersten und zweiten Kennungen, die zu den besagten ersten Daten addiert wurden und jeweils besagten Source-Kommunikationsknoten (N1) bezeichnen, der zugehörig ist zu einem ersten Kommunikationspfad, der zum Übertragen der ersten Daten verwendet wird, und von ersten und dritten Kennungen, die zu besagten zweiten Daten addiert wurden und jeweils den besagten gewählten Kommunikationsknoten (N1; N3) bezeichnen, und einen zweiten Kommunikationspfad, der anders ist als der erste Kommunikationspfad und für das Übertragen der besagten zweiten Daten verwendet wird.

15. Verwendung des Verfahrens nach einem der Ansprüche 1 bis 6 und das System (S) nach einem der Ansprüche 7 bis 11 zum Übertragen von ersten und/oder zweiten Daten gemäß einem Zeitverteilungsprotokoll "über IP", gewählt aus einer Gruppe, die mindestens IEEE 1588V2/UDP/IP und NTP/UDP/IP umfasst.

## Revendications

1. Procédé de synchronisation d'une horloge client (CC) d'un noeud de communication client (N2) avec une horloge maîtresse (MC) dans un réseau de paquets de données, **caractérisé en ce qu'**il comprend les étapes i) de transmission de premières données représentatives d'informations de synchronisation de ladite horloge maîtresse (MC) à partir d'un noeud de communication source (N1) vers ledit noeud de communication client (N2) par l'intermédiaire d'un protocole de distribution du temps au niveau des paquets et à travers un premier chemin de communication, ii) de transmission de deuxièmes données représentatives d'une référence de fréquence, avec laquelle lesdites informations de synchronisation sont mises en corrélation, à partir d'un noeud de communication choisi (N1 ; N3) vers ledit noeud de communication client (N2) par l'intermédiaire d'un protocole de distribution du temps au niveau des paquets et à travers un deuxième chemin de communication différent du premier chemin de communication, et iii) de différenciation desdites premières et/ou deuxièmes données transmises dans ledit noeud de communication client (N2) pour synchroniser ladite horloge client (CC) avec ladite horloge maîtresse (MC) au moyen des informations de synchronisation ou de la référence de fréquence représentée(s) par lesdites premières et deuxièmes données différenciées.

2. Procédé selon la revendication 1, dans lequel dans l'étape ii) ledit noeud de communication choisi (N3) utilisé pour transmettre lesdites deuxièmes données est différent dudit noeud de communication source (N1).

3. Procédé selon la revendication 1, dans lequel dans l'étape ii) on utilise ledit noeud de communication source (N1) comme ledit noeud de communication choisi (N1 ; N3) pour transmettre lesdites deuxièmes données.

4. Procédé selon l'une des revendications 1 à 3, dans lequel dans les étapes i) et ii) ledit noeud de communication source (N1) ajoute un premier identifiant auxdites premières données et un deuxième identifiant auxdites deuxièmes données, et dans l'étape iii) ledit noeud de communication client (N2) différencie lesdites premières et deuxièmes données transmises de leurs premier et deuxième identifiants respectifs.

5. Procédé selon l'une des revendications 1 à 3, dans lequel dans l'étape i) ledit noeud de communication source (N1) ajoute un premier identifiant, désignant ledit noeud de communication source (N1), et un deuxième identifiant, désignant le chemin de communication utilisé pour transmettre lesdites premières données, auxdites premières données, et dans l'étape ii) ledit noeud de communication choisi (N1 ; N3) ajoute un premier identifiant, désignant ledit noeud de communication choisi (N1 , N3), et un troisième identifiant, désignant l'autre chemin de communication utilisé pour transmettre lesdites deuxièmes données, auxdites deuxièmes données, et dans l'étape iii) ledit noeud de communication client (N2) différencie lesdites premières et deuxièmes données transmises de leurs premier, deuxième et troisième identifiants respectifs.

6. Procédé selon l'une des revendications 1 à 5, dans lequel dans les étapes i) et ii) un noeud transmet les premières et deuxièmes données par l'intermédiaire du même protocole de distribution du temps.

7. Système (S) de synchronisation d'une horloge client (CC) d'un noeud de communication client (N2) avec une horloge maîtresse (MC) dans un réseau de paquets de données, **caractérisé en ce qu'**il comprend i) un premier module (M1) associé à un noeud de communication source (N1) et conçu pour générer des premières données représentatives d'informations de synchronisation de ladite horloge maîtresse (MC) devant être transmises par ledit noeud de communication source (N1) audit noeud de communication client (N2) par l'intermédiaire d'un protocole de distribution du temps au niveau des paquets et à travers un premier chemin de communication, ii) un deuxième module (M2) associé à un noeud de communication choisi (N1 ; N3) et conçu pour générer des deuxièmes données représentatives d'une référence de fréquence avec laquelle lesdites informations de synchronisation, devant être transmises par ledit noeud de communication choisi (N1 ; N3) audit noeud de communication client (N2) par l'intermédiaire d'un protocole de distribution du temps au niveau des paquets et à travers un deuxième chemin de communication différent du premier chemin de communication, sont mises en corrélation, et iii) un troisième module (M3) associé audit noeud de communication client (N2) et conçu pour différencier lesdites premières et deuxièmes données transmises pour fournir les informations de synchronisation et la référence de fréquence qu'elles représentent, afin que ladite horloge client (CC) puisse être synchronisée avec ladite horloge maîtresse (MC) au moyen des ces informations de synchronisation ou de cette référence de fréquence.

8. Système selon la revendication 7, dans lequel ledit noeud de communication choisi (N3) utilisé pour transmettre lesdites deuxièmes données est différent dudit noeud de communication source (N1).

9. Système selon la revendication 7, dans lequel ledit noeud de communication choisi (N1 ; N3) utilisé pour transmettre lesdites deuxièmes données est ledit noeud de communication source (N1).

10. Système selon l'une des revendications 7 à 9, dans lequel ledit premier module (M1) est conçu pour ajouter un premier identifiant auxdites premières données et un deuxième identifiant auxdites deuxièmes données, et ledit troisième module (M3) est conçu pour différencier lesdites premières et deuxièmes données transmises de leurs premier et deuxième identifiants respectifs.

11. Système selon l'une des revendications 7 à 9, dans lequel i) ledit premier module (M1) est conçu pour ajouter un premier identifiant, désignant ledit noeud de communication source (N1), et un deuxième identifiant, désignant le chemin de communication utilisé pour transmettre lesdites premières données, auxdites premières données, ii) ledit deuxième module (M2) est conçu pour ajouter un premier identifiant, désignant ledit noeud de communication choisi (N1 ; N3), et un troisième identifiant, désignant l'autre chemin de communication utilisé pour transmettre lesdites deuxièmes données, auxdites deuxièmes données, et iii) ledit troisième module (M3) est conçu pour différencier lesdites premières et deuxièmes données transmises de leurs premier, deuxième et troisième identifiants respectifs.

12. Troisième module (M3) destiné à être associé à un noeud de communication client (N2) d'un réseau de paquets de données, **caractérisé en ce qu'**il est conçu, lorsque ledit noeud de communication client (N2) a reçu des premières données représentatives d'informations de synchronisation d'une horloge maîtresse (MC) à partir d'un noeud de communication source (N1) et par l'intermédiaire d'un protocole de distribution du temps au niveau des paquets et à travers un premier chemin de communication, et/ou des deuxièmes données représentatives d'une référence de fréquence, avec laquelle lesdites informations de synchronisation sont mises en corrélation, à partir d'un noeud de communication choisi (N1 ; N3) et par l'intermédiaire d'un protocole de distribution du temps au niveau des paquets et à travers un deuxième chemin de communication différent du premier chemin de communication, pour différencier lesdites premières et deuxième données reçues pour fournir les informations de synchronisation et la référence de fréquence qu'elles représentent, afin qu'une horloge client (CC) dudit noeud de communication client (N2) puisse être synchronisée avec ladite horloge maîtresse (MC) au moyen de ces informations de synchronisation ou de cette référence de fréquence.

13. Troisième module selon la revendication 12, conçu pour différencier lesdites premières et deuxièmes données transmises des premier et deuxième identifiants qui leur sont ajoutés respectivement.

14. Troisième module selon la revendication 12, conçu pour différencier lesdites premières et deuxièmes données transmises des premier et deuxième identifiants ajoutés auxdites premières données et désignant respectivement ledit noeud de communication source (N1) associé à un premier chemin de communication utilisé pour transmettre lesdites premières données, et des premier et troisième identifiants ajoutés auxdites deuxièmes données et désignant respectivement ledit noeud de communication choisi (N1 ; N3) et un deuxième chemin de communication, différent du premier chemin de communication et utilisé pour transmettre lesdites deuxièmes données.

15. Utilisation du procédé selon l'une des revendications 1 à 6 et système (S) selon l'une des revendications 7 à 11 pour transmettre des premières et/ou deuxièmes données conformément à un protocole de distribution du temps « sur IP » choisi dans un groupe comprenant au moins IEEE 1588V2/UDP/IP et NTP/UDP/IP.
